# EUROPEAN PATENT APPLICATION

(11) **EP 1 205 860 A2**
(43) Date of publication of application: **15.05.2002**
(21) Application number: 01480086.6
(22) Date of filing: 13.09.2001
(51) Int. Cl.: G06F 17/30

(54) **Method of defining variables to be used in a multi-lingual Internet presentation system**

(30) Priority: 14.11.2000 EP 00480105
(71) Applicant: INTERNATIONAL BUSINESS MACHINES CORPORATION, Armonk, NY 10504 (US)
(72) Inventor: Heasman, Brian, 1050 Ixelles Bruxelles (BE); Loscher, Benoit, 4800 Verviers (BE); Von Koschembahr, Christopher, 1380 Ohain (BE); Raspoet, Steve, 1742 Ternat (BE)
(74) Representative: de Pena, Alain

(57) **Abstract**

Method of defining variables to be used in a multi-lingual presentation system accessed by the Internet network (12) wherein a plurality of visual objects such as charts or slides controlled by a third party in a server (18) can be accessed by any user of the Internet network having a workstation (10-1, 10-2, 10-3), the visual objects being associated each with an audio recording in any language selected amongst several predetermined languages.This method consists in creating a control file containing all the variables defining all the parameters of a presentation requested by a user of the Internet network, the variables being defined in the control file previously to the presentation.

## Description

### Technical field

The present invention relates to Internet systems enabling to conduct conferences and presentations by means of charts or slides accompanied with audio recordings to audience anywhere in the world and relates in particular to a method of defining variables to be used in a multi-lingual Internet presentation system.

### Background

Today, audiences including thousands of participants in the world can attend conferences and presentations broadcast by the Internet network. During such a presentation, the participant can view visual objects such as charts, slides, images, graphics (generally in PowerPoint) and listen to prerecorded audio recordings associated with each visual object.

In general, the speaker who is in charge of adding audio comments to the visual object, does not assemble the final deliverable contents but could, via access to the Internet web pages, invoke the assembly process. The assembly is normally done by a third party who has the skills in creating the synchronized objects or an automatic system.

But there are many problems associated with creating a presentation having a synchronized audio recording to the visual objects. Thus, the speaker must have a ready access to equipment like a recording machine, a microphone or a PC with audio support to create the recording. An alternative is to go to a recording studio and to use facilities there, but this is not always immediately available and it is an expensive solution. If the user chooses to use a tape recorder, the third party which receives this media must have a similar equipment available to replay the recording.

But, from its initial creation stage to its final published form, there can be many variants of the web deliverable presentation that end users view. During the initial stages of creation, there may be no audio available, so a set of web pages needs to be created so that the content creator can view the slides in a web format to proof read the contents. At some later stage, there may be added audio which requires generating another set of web pages which is different from the first one since it now contains audio.

If different types of audio streaming support are allowed, this again changes the format of the web pages and the number of web pages that have to be created.

Also, creators have differing requirements and as technology changes, and there may be other variables added. These variables can be the language of the audio, the different sizes of graphics, a survey, the presenter name, a title, a biography, an index of the slides, etc.

All these permutations consume large amounts of time in creating for each presentation its own unique set of HTML pages. Also, a simple change like an increase in the number of slides requires considerable rework. For example, "the export as HTML pages" function in a Freelance Graphic presentation will create 92 HTML pages for a 30 slide presentation. For Power Point, the similar function will create 72 HTML pages. Furthermore, these pages have only the basic navigation feature and do not include the required HTML functions for streaming audio.

### Summary of the invention

Accordingly, the main object of the invention is to achieve a method of defining previously all the variables to be used in a multi-lingual presentation without requiring HTML pages for each presentation for which different variables are used.

The invention relates therefore to a method of defining variables to be used in a multi-lingual presentation system accessed by the Internet network wherein a plurality of visual objects such as charts or slides controlled by a third party in a server can be accessed by any user of the Internet network having a workstation, the visual objects being associated each with an audio recording in any language selected amongst several predetermined languages. This method consists in creating a control file containing all the variables defining all the parameters of a presentation requested by a user of the Internet network, the variables being defined in the control file previously to the presentation.

### Brief description of the drawings

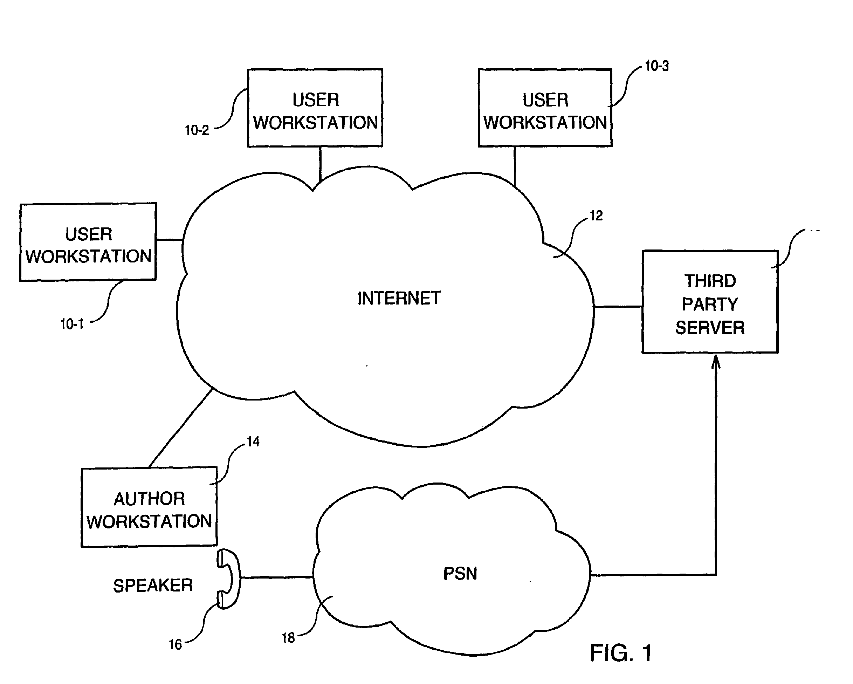

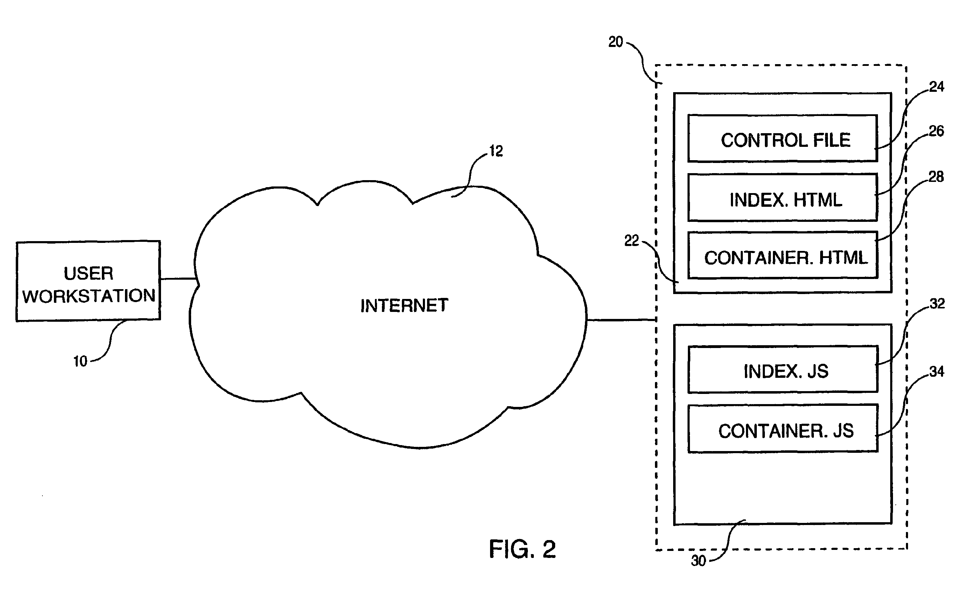

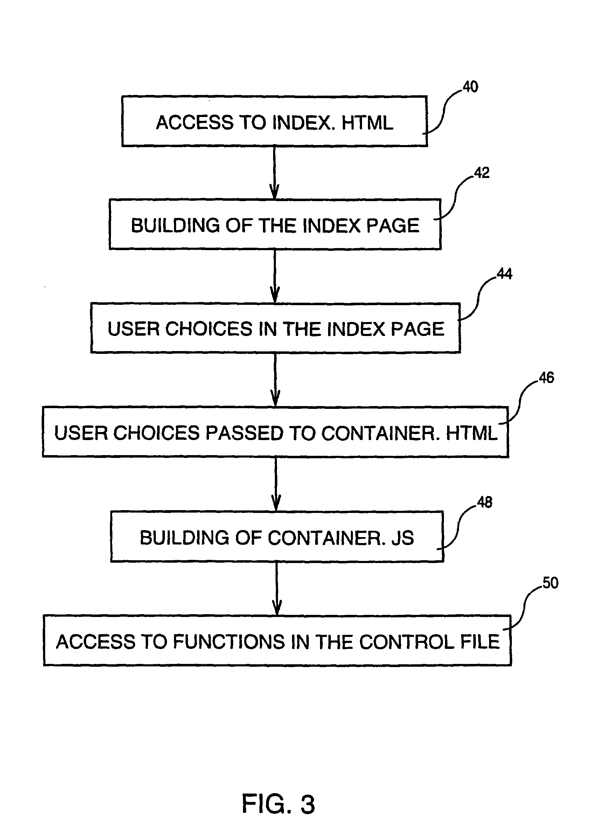

The above and other objects, features and advantages of the invention will be better understood by reading the following more particular description of the invention in conjunction with the accompanying drawings wherein :
■ Fig. 1 is a block-diagram representing the general context wherein the invention is implemented.
■ Fig. 2 is a block-diagram representing the third party server with the files that are transferred to the user workstation via the Internet network.
■ Fig. 3 represents a flow chart of the various steps used by the methods according to the invention when a user gets access to the third party server.

### Detailed description of the invention

Referring to Fig. 1, it is assumed that the third party responsible for the presentation system has already generated the charts or slides to be presented to the users connected by their workstations 10-1, 10-2, 10-3, to the Internet network 12. The author (or a speaker) has then to record audio files each being associated with each chart or slide. The author has at his disposal a workstation 14 connected to the Internet network 12 and a telephone set 16 connected to the Public Switched Network (PSN) 18.

The author of the presentation is provided with an identification number ID, a password and a telephone number (via web pages, e-mail or conversation with the third party). When he wants to record the audio recordings, he calls the third party server 20. At this time, the speaker is prompted to enter his ID by means of workstation 14.

The ID entered by the author determines the language to be used, the naming convention for the file and the location for the recordings. In general, the third party stores the objects and the corresponding audio files in the same location as that specified by the ID in a content directory. Thus, for example, the ID may contain the number 6666 that is the directory name in which the final recordings are to be stored.

During the creation of the charts or slides with synchronised audio, the author is asked several questions regarding the presentation. According to the main feature of the invention, this information is stored in a control file, preferably a javascript file which can be named "INI.JS" for example, and includes the title of the presentation, the number of slides, the duration of the presentation, the language used, the date of last update, the first slide, the abstract, the biography ... ; that is all the variables used by the supporting HTML which are then accessed by any user of the presentation.

An example of the code included in the control file with an explanation of the function in italics is given hereafter :

| **Code** | **Description** |
|---|---|
| AudioStatus="rec" | *audio has been recorded, so enable the audio streaming option.* |
| BambaJava="yes"; | *provide the option of Bamba for Java audio streaming* |
| BambaPlugin="yes"; | *provide* the *option of Bamba Plugin audio streaming* |
| commonDir="/common_v2_0/"; | *the location where the html pages are located* |
| cutPoints="6,12,18,24,30,36"; | *the slide numbers for the start of a new part (chapter)* |
| Duration="51"; | *the time*/*duration of the audio (in minutes)* |
| ExternalPres="no"; | *change the look and feel, plus colours to that of the Internet Server if 'yes'* |
| FoilExtension="jpg"; | *the file extension name of the slide.* |
| FoilName="slide"; | *the name prefix of the slide (in thsi example, slides will be named slidel.jpg*, *slide2.jpg*, *etc)* |
| Hal="no"; | *Do not provide the option of HotAudio audio streaming* |
| JbCodebase="/JavaBamba/"; | the location of the codebase files required for Bamba for Java audio streaming |
| language[1]="ENG,English"; | *The language of the audio file and hence the language that should be used for the navigation controls* |
| lastUpdate="23/05/00 17:29:05" | *Date and time when the presentation was last modified* |
| multipleResolutions="yes"; | *Provide the option of large or small graphics.* |
| presAbstract="A summary of the business to business opportunity with e-commerce. Outlines the opportunity, challenges, and the strategy for addressing this opportunity."; | *Abstract for this presentation.* |
| Email="heasmanb@be.ibm.com"; (if it has to be a real address then make it mine. | Email address of the presenter |
| presName="Big ... Really BIG - The Business to Business Opportunity"; | Name of this presentation |
| questionURL="noquestion" | Does the presentation have a feedback feature (send questions to the presenter)? |
| showIcons="yes"; | Show icons or text-only links? |
| speakerBio=" Brian: has almost 15 years experience with IBM, and has been in e-business marketing since its inception at IBM. | Biography of the presenter |
| speakerName="Brian"; | Name of the presenter |
| SurveyURL="nosurvey"; | Does the presentation have a feedback feature (complete a survey)? |
| TotalSlides=42 | *Number of slides in this presentation.* |
| ReturnURL[1]="Online Library", http://Our_server.ibm.com/"; | *Label and URL for a link* |

As shown in Fig. 2, the third party server 20 includes the content directory 22 which contains control file 24. The content directory also contains the graphic and audio files (not shown) and two generic files INDEX.HTML 26 and CONTAINER.HTML 28. But other generic files are contained in a common directory 30. Such generic files are INDEX.JS 32 and CONTAINER.JS 34 if they are javascript files.

Note that the main reason the two generic HTML files are in the content directory 22 is that the user can link to them via a web browser. Other than loading the control file and specific files in the common directory, there is no functionality in these files. The real functionality is in the files within the common directory.

When an end user wants to have the presentation in the user workstation 10, the steps to be used are illustrated by the flow chart represented in Fig. 3. First, the user accesses INDEX.HTML (step 40) which is the introductory page describing the presentation and the speaker. Such an introductory page contains as an example the following information :
- Title of Presentation
- Presenters Name
- Number of Slides
- Duration of the audio
- Language/languages
- Abstract of Presentation
- Biography of Presenter
- Picture of Presenter
- Choice of large or small graphics
- Which part (Chapter) they wish to start with.
- Audio Steaming Options with or without icons.

In accessing INDEX.HTML, the control file (INI.JS) is automatically downloaded in the user workstation as well as INDEX.JS that is within common directory 30 in order to build the index page (step 42). The file INDEX.JS contains the real functionality needed to build the index page. The variables in the control file are then used to :
1. Complete INDEX.JS
   e.g. to display the title of presentation, INDEX.JS contains the following line of code :
   Document.write('<H3>'4+presName+'</H3<')
   The presName variable from the control file is then used to complete this line of code with the title of the presentation.
2. Allow/disallow access to certain functions/features
   e.g. the index.JS has the possibility to let the user start the presentation using different streaming technologies. All options are not necessarily shown, only those that are listed in the control file.

Once the index page is downloaded, the user can read the details on the presentation and the speaker and make certain choices in regard to the presentation he is about to start (step 44). These choices include the language being used, the size of foil graphics, the part number at which to start the presentation and the technology in which to listen to the audio.

Once the user has indicated he wants to start the presentation using certain options, the file CONTAINER.HTML is sent in the browser for the userworkstation. User choices are passed (step 46) by adding them in the URL (hash statement).

Then, the access to CONTAINER.HTML automatically loads the control file INI.JS and the file CONTAINER.JS that is within common directory 30. Similar to step 42, the control file is used to build CONTAINER.JS and allow/disallow functions and features (steps 48). The users choices that were passed in the URL are also used for this purpose. As an example, the control file can define the presentation as being divided in three parts : charts 1-5, charts 6-10 and charts 11-15. As a result the index page will offer the user the option to select at which part he wants to start the presentation (e.g. part 2). His choice is then passed in the URL to CONTAINER.HTML. The latter file looks at the control file to determine which charts are included in part 2 and displays only those charts.

Once the container page is completely built, the user will have access to certain functions as defined in the control file (step 50). Some of these functions will in return load HTML and/or JS files that are in common directory 30. As these files are loaded within a specific frameset, they can access the variables in the control file by reading them from COINTAINER.JS which is its parent. As an example, in the control file, the variable AskaQuestion is set to "yes". This results in the container displaying a button that the user can press to bring up "Question.HTML", which is a file in the common directory. This file will then read certain variables from the control file, such as e-mail address, and use this information to customize the otherwise generic Question.HTML file.

In summary, the invention is to store the complementary information (basic information being the slides and associated audio recordings) in a control file, so that a very limited number of specially written HTML pages can use the variables within this file to provide the end result. By using this approach, the work associated with creating a presentation or the end viewed result is all contained in this file as variables. Only one HTML Page per audio streaming type is required with the information needed for this page being stored as variables in the control file. Note also that the same HTML pages can be used for all presentations, the control file being the only file which is different.

Again, there is one HTML page which performs the function of the introductory page. This page gives an overview of what the presentation contains. On selecting an audio streaming option, the user enters a second page. There is one HTML page for every audio streaming option. For each additional function like Help, Survey, Ask a question, etc. there is a single HTML page per language being used. On inputting the second page, the user sees the graphics and will hear the first audio recording. Depending on the definition of the variables in the control file, the user will see a series of buttons for Help, Survey, et. Note that, since all the features and functions are stored in the control file, it is possible to make for example the Help function become an intelligent Help screen. Since the Help HTML Page can be made to read the control file, it can predetermine what the user has as options and only provide Help for the options visible.

## Claims

1. Method of defining variables to be used in a multi-lingual presentation system accessed by the Internet network (12) wherein a plurality of visual objects such as charts or slides controlled by a third party in a server (18) can be accessed by any user of said Internet network having a workstation (10-1, 10-2, 10-3), said visual objects being associated each with an audio recording in any language selected amongst several predetermined languages ;
said method consisting in creating a control file containing all the variables defining all the parameters of a presentation requested by a user of said Internet network, said variables being defined in said control file previously to said presentation.

2. Method according to claim 1, wherein said control file includes all the variables used by the HTML pages which are accessed by a user of said Internet network requesting to get a presentation.

3. Method according to claim 2, wherein said variables include at least the title of the presentation, the number of charts or slides in the presentation, the duration of the presentation, the language being used, the first slide of every part in the presentation and an abstract of the presentation.

4. Method according to claim 1, 2 or 3, further comprising the step of creating a file INDEX.HTML containing the introductory or index page describing the presentation and the speaker, such a page being accessed by the user in said workstation (10-1, 10-2, 10-3).

5. Method according to claim 4, wherein said introductory page includes the following information :
- Title of Presentation
- Presenters Name
- Number of Slides
- Duration of the audio
- Language/languages
- Abstract of Presentation
- Biography of Presenter
- Picture of Presenter
- Choice of large or small graphics
- Which part (Chapter) they wish to start with.
- Audio Streaming Options with or without icons.

6. Method according to claim 4 or 5, wherein said user can make choices when accessing to said introductory page in said workstation (10-1, 10-2, 10-3) such as the language being used, the size of graphics on the slides, the part number at which to start the presentation and the technology in which to listen to the audio recordings associated with the slides.

7. Method according to claim 6, further comprising the step of creating a file CONTAINER.HTML which contains all the details of the presentation including the choices made by the user when accessing to said introductory page.

8. Method according to claim 7, wherein the user can access to certain functions defined in said control file by using said file CONTAINER.HTML being loaded in said workstation (10-1, 10-2, 10-3).

9. Method according to claim 8, wherein said control file contains a variable "AskaQuestion" and said file CONTAINER HTML causes a button to be displayed in said workstation (10-1, 10-2, 10-3), said button being used by the user to ask a question.

10. System comprising means adapted for carrying out the method according to any one of claims 1 to 9.
